# EUROPEAN PATENT SPECIFICATION

(11) **EP 1 599 005 B1**
(45) Date of publication and mention of the grant of the patent: **01.02.2006**
(21) Application number: 04011956.2
(22) Date of filing: 19.05.2004
(51) Int. Cl.: H04L 29/06

(54) **A method and system for locating facilities in the vicinity of a user unit**
Verfahren und System für das Lokalisieren von Einrichtungen in der Nähe einer Benutzereinheit
Méthode et système pour localiser des équipements à proximité d'une unité d'utilisateur

(43) Date of publication of application: 23.11.2005
(73) Proprietor: Web.De AG, 76227 Karlsruhe (DE)
(72) Inventor: Greve, Michael, 76227 Karlsruhe (DE)
(74) Representative: DTS München

(56) References cited:
- WO-A-00/41090
- WO-A-02/17567
- WO-A-02/093290

## Description

### Field of the invention

The invention relates to a method and a communications system for retrieving services and/or facilities in the vicinity of a user.

### Background of the invention

The Internet is an established medium for dispreading information to a large number of people. The most famous part of the Internet is the so-called World Wide Web (www) providing any kind of information and search machine to retrieve information and data about anything of interest. The most popular protocol used is the so-called Hyper Text Transfer Protocol (http) which is most commonly used to interchange information between clients and hosts. To achieve this hosts usually run so-called web server. The web server is able to retrieve information from further servers, for example from database servers. For interaction with a database server or other servers, web servers usually have gateways like Common Gateway Interface (CGI), PHP or the like.

Once a client sends a request to the server application, the request is processed by the web server which is requesting data from a database server and then is sending the data back to the client computer. There the resulting data are processed and presented by a browser. Commonly, the web server retrieves on the fly data from remote data sources like data base servers. That means that the client computer is not able to recognize and is not notified about the fact that secondary data sources are used. Beside this the web server may locally cache often-retrieved data.

Web servers are e.g. used to constitute parts of data communications networks to provide data communications services such as Email or Instant Messaging. Recently, web servers were introduced to interact with telecommunications networks, in particular the Public Switched Telecommunications Networks (PSTN) to provide classic telecommunication services, in particular telephone services. The network for providing the telecommunication service can be any kind of analogue or digital telephone service network, i.e. any PSTN, Integrated Services Digital Networks (ISDN) or packet switched telephone networks, e.g. ATM networks and the like. Furthermore, cellular mobile telephone networks like GSM or UMTS networks may be used as well.

In EP 1359702 a communications environment is disclosed for providing a multitude of communication services, especially web messaging services and telephone services. The user is offered a personalized web site to perform and control these multitude of communication services and to be reached and contacted at the single address of said website.

WO03/094432 discloses a telecommunications website, where telephone connections between two or more telephones are established under control of a website.

WO2002/017567 describes a wireless communication system wherein a user of a mobile device running a browser application may access various sites depending on the geographical location of the mobile device.

WO02/093290 describes a system and method which enable a wireless device to discover internet businesses and service while monitoring the geographic location a coordinates of the wireless device.

Beside this recently proposed communication environment it is further Known to have conventional data networks with web servers for retrieving information about public or private services and/or facilities respectively in a certain area, for example in a city or a district. Commonly a search machine running on a web server is accessed to input keywords for the requested information, e.g. "italian restaurant". The searched services and/or facilities can be for example restaurants, department stores, parking lots, theatres, gas stations, or any other public available service or facility. In order to get valuable results from the search, i.e. to retrieve information about services and/or facilities in the vicinity of the user, there further must be input an address or the postal code (zip code) of a location at which the service and/or facility is wished to be found. Sometimes the user is provided with a list of locations to be chosen and then a search is conducted. Such electronic search tool can be found at certain websites which are similar to the well-known "yellow pages". Such a website offering this search tool can e.g. be found at the URLs http://www.gelbeseiten.de/ or http://www.yellowpages.com/.

### Objects of the invention

It is an object of the invention to provide a method, a system and a web server that gives more convenient access to a database system or a database service for retrieving information about services and/or facilities in the vicinity of a user.

### Summary of the invention

The aforesaid object is achieved by a method, a communications system and a web server according to the claims attached hereto. According to the present invention, the aforesaid object is especially achieved by a method for retrieving information about services and/or facilities in the vicinity of a user equipment being part of a communications environment, the communications environment comprising a web server and a client computer being connected to a information communications network, a telecommunications terminal (e.g. a telephone) being connected to a telecommunications network, said client computer and telephone equipment both being parts of said user equipment which is assigned to the user, wherein said client computer sends information requests to said web server which delivers the requested information (e.g. name, address and phone No. of all Italian restaurants in the vicinity of users location) to said client computer server where the information is presented to the user on a webpage. The location of the user equipment is found by taking for the search the telephone number assigned to the user equipment as reference. In particular the prefix or area code of telephone number can easily be taken as a reference for the location, namely the town or even district at which the user is present. As the user may log into the communications environment from any user equipment he or her has access to, the location is not at all a fixed address, but may change quite often.

In the context of the present invention, the word services is not restricted to special services like communication services or the like, but shall mean any kind of services or attendances. The word facility shall mean all kinds of institutions, places, houses, rooms or the like where public or private valuable services can be found. Thus the word facilities comprise all kinds of locations, addresses or the like. In particular facilities can be restaurants, shops, garages, offices, surgeries, agencies etc.

A client computer might be a so-called personal computer, a terminal of a larger computer system, a laptop or the like. The web server is usually run by a central computer host as a software application that provides web pages for client computers that are connected to the hosts by said data network. Information provided by the web server is graphically displayed as a webpage by the client computer. Said data network is usually referred to as Internet, Wide Area Network, and Metropolitan Network etc. In the context of the present invention, every other kind of information technology using electronic equipment as data network is included. Telephone equipment can be a telephone using a public switched network, any kind of packet switched network, in particular IP network for VoIP, often referred to as Internet Telephony, or any kind of mobile terminal, in particular WLAN, GSM or UMTS terminal . Thus telephone equipment might be a single standalone terminal or apparatus for use without connection to the client computer, or can be a software based Telephone application running on said client computer. The client computer and the telephone equipment form said user equipment. Therefore, nevertheless whether those systems are integrated parts or single units, telephone equipment and client computer are located near each other, so that a user can use them simultaneously.

The user is assigned a personal website being available for managing and controlling his/her communication from any place where he or her can access an end user equipment being part of the communications environment. In the following the user equipment is also referred to as user unit. A communications environment having these features has been disclosed by the applicant in WO 03/094469 A2. The user can define more than one user unit suitable for interaction with the communications environment. For example, a client-computer located in the office of the user together with a telephone located in this office can form a first user unit, a client computer located at home together with a home phone might be a second user unit, a client computer in the lobby of a hotel together with a mobile phone (e.g. GSM or UMTS phone) might by a third user unit and so on. The user simply defines within his/her settings the currently used user unit by choosing the telephone number of the telephone equipment assigned to this user unit. In other words. The currently used unit is marked by the corresponding number being the active number. If the user for example uses the client computer and the telephone located in his/her office, he will choose the telephone number of the office's telephone e.g. in a list box (check box) of his/her personal website and therewith define the first user unit as the currently used one. So by choosing said telephone number to be the active number the location of the unit is defined.

The personalized website of the user now further offers a search tool for easily retrieving information about services and/or facilities in the vicinity of the current location defined by the chosen telephone number. If for example the user searches for facilities in the vicinity of his current location or place, the system takes this telephone number as a starting point for performing the search. First this telephone number is taken to determine the current location of the user unit. This location is then taken as a reference, e.g. as center point of a circle area, for searching for facilities in the vicinity of the user unit. If a mobile terminal is used the current location is determined by retrieving the Location Area Indentity (LAI) from the mobile service provider or other localization information such as Radio Cell ID or even GPS data.

In a preferred embodiment said search for facilities in the vicinity of said user unit is performed after entering one or more key words into an input field being presented on a webpage of the communications website. This field is also referred to as search field. These entered words are also referred to as search terms for the requested information about the services and/or facilities of interest. Beside the search terms the user may input also some parameters or conditions for that search, such as a maximum number of results to be retrieved and/or displayed distance or a certain distance around his own place for searching for facilities. For example the user enters the keywords "Italian" and "restaurant" and a distance of for example "500" meters to conduct a search for Italian restaurants in a maximum distance of 500 meters around his or her current location .

In a further preferred embodiment said method further comprises a step of ranking the results of the search by user-defined rules. The user defines rules for ranking the results. The rules are applied similar to a filter that extracts and/or rearranges the results of the query. Such a user rule may be that all results containing the keyword "Napoli" shall appear first in the result list. Also global or system-wide rules may be used, such as alphabetic order or ranking according to the retrieved zip codes. The rules can be stored locally on the client computer or on the web server. The rules are preferably defined by a simple programming language or by choosing rules out of predefined global rules.

The aforesaid object is furthermore achieved by a communications environment and a web server being prepared to perform that method.

The invention will now be described in more detail and according to preferred embodiments which are illustrated in the accompanied drawings:

### Brief description of the drawings

- Fig. 1: is a sketch showing the principal architecture of a communications environment according to the present invention;
- Fig. 2a: shows the main web page of the communications website being presented according to the invention;
- Fig. 2b: shows webpage for user settings used within the invention;
- Fig. 3: shows a web page with search results according to the invention.

### Detailed Description of the Invention

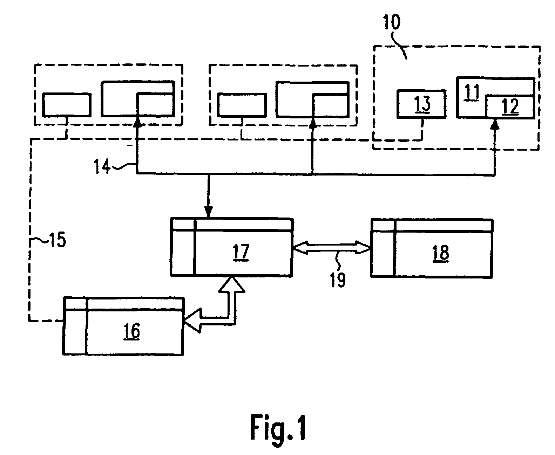

Fig. 1 depicts a sketch showing the principal architecture or the communications environment according to the present invention. The communications environment comprises a client computer 11, which is connected via a data communications network 14 with a web server 17. In this example the network 14 an IP network which connects a multitude of client computers 11 with a multitude of web servers such as web server 17. The Fig. 1 just shows three client computers being connected with one web server 17 as a simple example to reduce the complexity of the following description. For the understanding of the described embodiment of the present invention it is sufficient to regard the one client computer 11 which is connected via the data network 14 to the one web server 17. Thus, the following description can be limited on the description of these elements.

The client computer 11 can be any kind of computer or computing system, such as a personal computer, a laptop, a computer terminal or the like. The client computer 11 runs a web browser 12 as software application to easily access and request the web server 17 for providing information. Upon a request the web server 17 retrieves information to be provided to the client computer 11. The information data is then processed by the client computer 11 and preferably displayed as a web page by web browser 12. The web page displayed by web browser 2 may include active and/or user controlled elements, for example buttons, sliders, check boxes or input fields for the purpose of interaction between user and the web server 18. Thus the user may simply enter his or her search terms into an text input field (search field) and may start the search by simply clicking on a send button. Or the user may chose standard terms from a list or pull-down menu.

The web server 17 offers a diversity of services for the client computer 11 and said web browser 12, respectively. Services are for example e-mail, chat, data base front ends of a great variety of information systems or so called unified messaging systems and so on.

The communication system according to Fig. 1 further comprises a telecommunications network 15 having a switching centre 16 to switch lines from telecommunication terminals such as the telephone 13 being located at the same place than client computer 11. Thus both, telephone 13 and client computer 11, constitute parts of the user unit 10. The telephones 13 might be analogue or digital telephones of a public switched telephone network, where the telephones 5 are connected with cables or the like to telephone network 6. Telephones 5 might also be mobile phones of a cellular telephone network like GSM or UMTS. Telephone net 6 as well as switching centre 7 allow to establish telephone connections between two or more telephones 5. Alternatively or additionally to PSTN telephones (such as 13) other equipment such as VoIP equipment for the so-called Internet telephony may be used as well. Thus the Internet (IP network 14) may also be used to provide telephone service. In this case voice data is transmitted as data packets of the IP network (voice over IP). In this case the client computer 11 will be equipped with a microphone and a loudspeaker, preferably as a headset.

The switching centre 16 is noit only connected to the PSTN network 15, but also (via a PSTN/IP gateway) to the web server 17. Because of this inter-connection, the PSTN services can be controlled by the user accessing the web server 17 by a user unit 10 such as shown in Fig. 1. Thus the user can establish a telephone connection between his or her telephone 13 and any other phone being connected to the PSTN network 15. Therefore the user simply need to enter or choose a telephone number in at the web page and then click on a call button. This means, that the user is simultaneously using the client computer 11 and the telephone 13. Of course both functionality may be integrated into a single user unit, such as a mobile phone or PDA.

As shown in Fig. 1 the web server 17 is further connected with a database server 18. The connection can be established by use of any data network, such as network 14 or the like. Preferably a dedicated connection 19 within a private network is used. Instead of a remote database server 18 the database itself can be integrated into or installed on the web server 17.

The database server 18 provides a directory service to find contact data, in particular address data and telephone contact data, of services and/or facilities within a certain area, city, district etc.. Thus the content of the database server 18 may be compared to that of yellow page books.

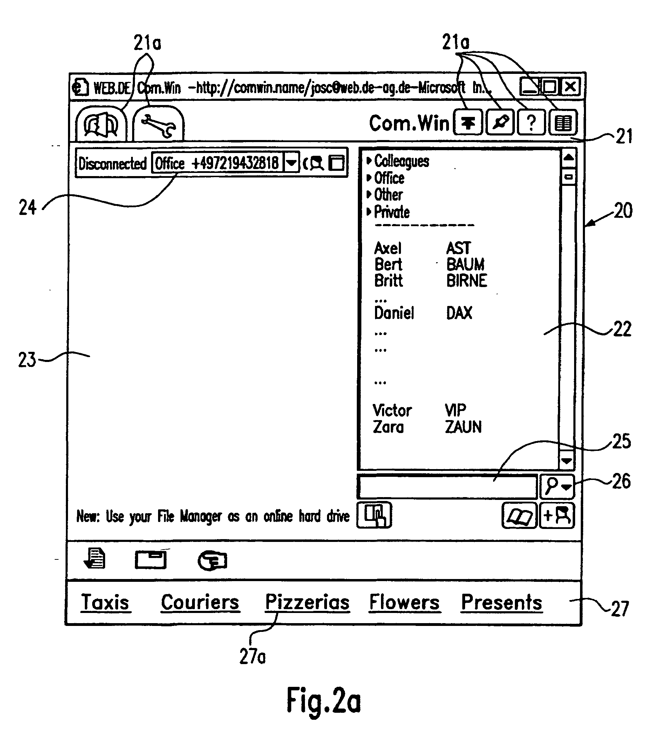

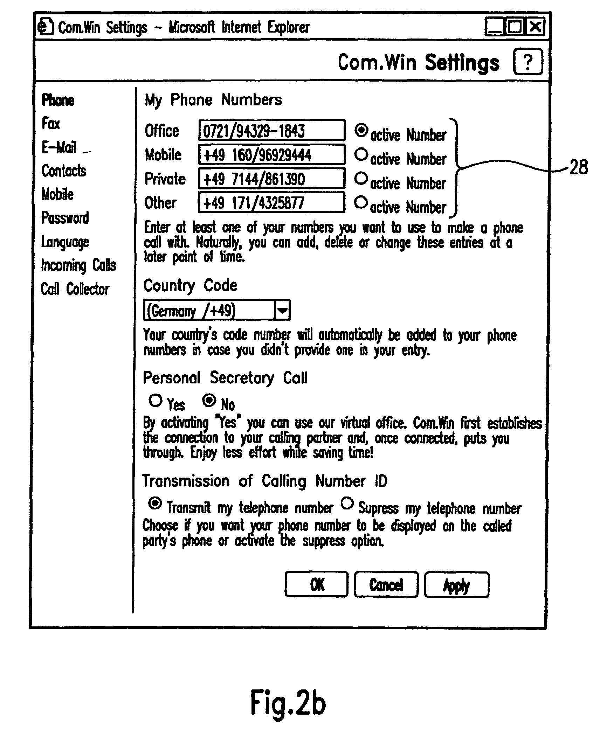

Further to this information data content the database also provides reference data to map telecommunications identities, in particular telephone numbers or parts therefrom, to respective location data, such as name of city, town, district, street etc. or zip code and the like. Thus the telephone number from the currently used telephone 13 can be mapped to a respective location and then a distinct search for services and/or facilities can be performed very easily. This feature will now be described in more detail while also looking at the Figures 2a and 2b.

The Fig. 2a shows an example of the web page displayed by the web browser 12 of client computer 11. The web page 12 is divided into different graphical zones and elements with different functions. An upper zone 13 (head zone or head frame) provides a multitude of control buttons 21a, each having a certain function. By clicking on one of these buttons a new window is opened or application is started. For example when clicking on the second button at the left side window with webpage 20 (see Fig. 2b) will be opened which provides settings of the user profile to be changed, such as inputting and/or selecting the active telephone number 28 at which the user can be reached. This is normally the telephone number 28 of that terminal (see 13 in Fig. 2a) which he or her is currently using.

As can be seen from Fig. 2b the user profile settings provide a set of four input fields to input there different phone numbers such as the user's office number, his or her mobile number, private number or any other number the user wants to be selectable for activating one number of the set, this active number is representing the telephone equipment at which the user wants to be reached and from which he or her wants to make calls. In Fig. 2b the user has activated his/her office number "+49.721.9432...." by just clicking the respective button (so-called radio button). Thus every incoming call will be switched and/routed through the communication networks to finally terminate at the telephone equipment 13 (see Fig. 2a) being located at the user's office. And for every outgoing call which the user initiates from his/her communications website being presented on the client computer 11 the web server 17 will control the switching centre 16 to establish a first PSTN connection (first leg) to the calling party, i.e. the office telephone equipment 13. Further a second PSTN connection (second leg) is established to the called party according to that telephone number which the user wants to be called. With the word party means any contact to be reached within the communications environment by any communication means and technology, such a phone, fax, SMS, e-mail, instant messaging and the like.

The user can very easily reach a contact by just selecting it from a list presented in the address field 22 of the webpage 20 (see Fig. 2a), because every shown contact, e.g. "Axel AST", represents a set with a multitude of contact data, such as name, address, telephone number, fax number, e-mail address etc.. When the user clicks onto that contact he wants to reach a window with the numbers and address is opened and the user can immediately initiate a phone call, fax, SMS, e-mail etc. by just clicking on that respective number (e.g. Axel's mobile phone number 0171-1234.. ) or address (e.g. axel.ast@email.de).

The webpage 20 further comprises a real time zone 23 to monitor and/or control the current status of communication, in particular the status of the telecommunications activities, which is displayed in real-time. On the top of the real-time zone 23 there is displayed the user status itself, in particular the status (e.g. "disconnected") of the terminal which the user currently uses, i.e. which is having the activated number (e.g. +49.721.9432918..."). In the main part of real time zone 23 the communication activities, such as making a call with a contact, receiving a call, e.g. on the answering machine etc., are recorded (not shown here in detail).

As explained before and as being shown in Fig. 2b, there is a page with user settings on which the user has the possibility to define a list with a plurality of telephone numbers 28 and to set one of it to be the "active number", each number is assigned to a telephone or other PSTN terminal being associated with a user unit (also see Fig. 1). Thus a user unit 10 may comprise a telephone 13 or terminal and a client computer 11 having access to the Internet by a Browser 12. All devices may be integrated into a single housing, e.g. a single communications terminal having telecommunication and web browsing functions. On page 28 in the list box the user selects the active number in dependence of what terminal he/her is currently using and where he/her is currently located (office, mobile, private or other). In the case as shown in Fig, 2b the user has selected the office number to be the active one. Accordingly this number will appear in the user status field 24 on page 20 (see Fig. 2a).

In all cases where fixed telephones are used the location where the user is currently present is clearly defined by the active telephone number, since the telephone number is assigned to a telephone residing at a certain place or address. In case of a mobile terminal the location may finally be defined by any method of locating the mobile terminal, such as triangulation or just evaluating the so-called LAI (location area identification) or any other location parameters.

On page 20 at the bottom of the frame there is a further zone 27 for presenting links 27a with different key words for services and/or facilities, such as taxis, couriers, pizzerias, flowers (flower shops) or presents (gift shops or the like). Of course any other keywords can be listed here. The presentation of keyword may depend on a list of favorites which the user has defined and which has been stored in his settings or anywhere else in the system. By just clicking on one of the links 27a the user can very easily conduct a search for example for a flower shop in the vicinity of his current location. His current location is defined by taking his/her current telephone number from in list box 20. Alternatively, the user can enter a key word in an editable input field. This is performed by clicking on button 26 to start a yellow page search and to enter keywords for a services or facilities that fit.

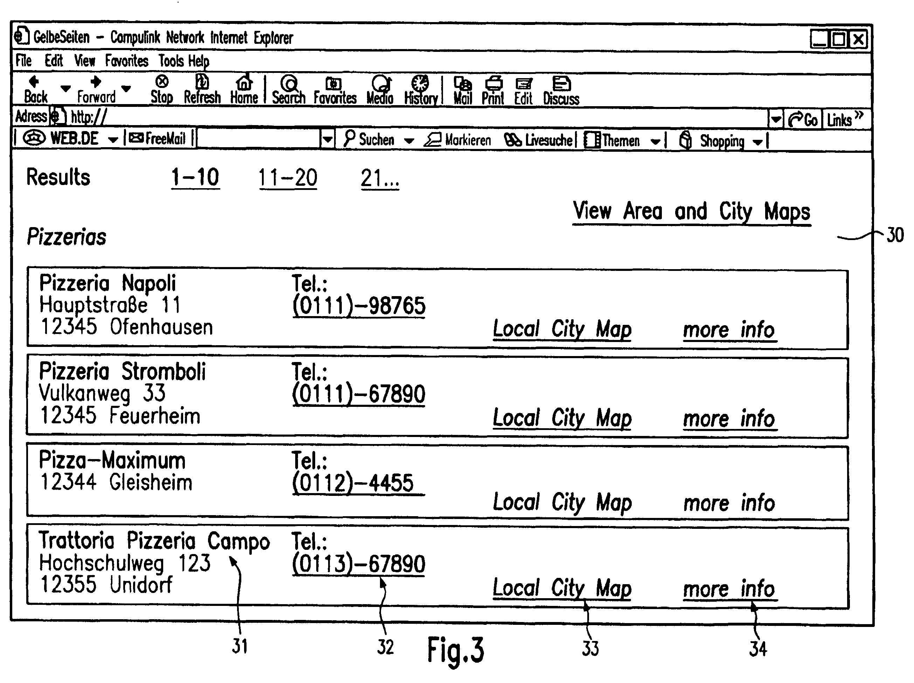

However the principle of focusing the search to the vicinity of the user's current location is performed by evaluating the active number from his/her settings (see 28 in Fig. 2b).. The system may take this telephone number and according to the PSTN numbering scheme may find from the first digits the corresponding city, village or district from where the user currently resides. The system therefore asks a database which can be installed on a remote server or which can be part of the system. As soon as the current location of the user is determined the search will be optimized, the results will automatically be filtered and presented in comfortable form such as shown in Fig. 3.

In order to perform such a comfort search the communications system may comprise a multitude of servers, each server performing a special task in the communications system. For example, one server might be a web server, a second server fulfills communication requests between a web application of the web server and a telephone net, a third server is responsible for conducting the search for locations in the vicinity of the user and so on. The means to process said location as a reference for searching for facilities in the vicinity of the user unit is usually a software application run by one of the servers.

As shown in Fig. 3 a web page 30 with the results of the conducted search is presented to the user. All result are services and/or facilities in the vicinity of the user. In a first row 31 the names and addresses of the retrieved services or facilities are displayed. In a second row 32 the corresponding telephone numbers are displayed, preferably in form of links which just have to be clicked to initiate a call. The third row 33 offers links to click to open a window with a city map of the region where the corresponding facility of service is located. A fourth row 34 includes links for more information such as links to the home pages of the services or facilities.

In the shown example the user has conducted a search for pizzerias in the vicinity of his/her current location. The user resides in his/her office (see active number in Fig. his/her office having the phone number as shown in Fig.3 (active number). By mapping this number to a zip code the system can immediately find out that the office is located in a village having the postal code (zip code) "12345" which means that the user's office is located in "Ofenhausen". Thus in the result list those pizzeria will appear first which are also located in the same village. In this example there is only one pizzeria named "Napoli". Of course further results are presented, in particular the next nearby the office. The ranking of the results may be done by name, by zip codes or by any other appropriate parameter. The results may appear in sets of a given number, such as 1-10, 11-20, 21-30 and so forth. The rules for searching and displaying the results can be defined globally for the whole system.

Alternatively or in addition to this, the user can define own rules for conducting a search. For example, the user may define time limits or a method for ranking of results. Defining a time limit means for example, the user may define that in a time period from 11 am to 1 pm only Italian restaurants shall be listed when searching for restaurants, between 6 pm and 9 pm only French restaurants shall be listed. The user can for example define a rule, that at lunchtime only local pizza delivery services are searched and displayed. Additionally, the user can define a rule that for example shops or other facilities shall only be listed during regular opening hours for example between 9 am and 5 pm. On special events, for example during holidays or during a trade fair in the city or the like, locations related with this event may be listed first. If for example an art exhibition takes place in an administration building of a local authority, this building may be listed first when searching for local authorities. Thus the user can define rules for evaluating and sorting the results of a search. By using the rules certain characteristics of every service or facility is analyzed. Theses characteristics can be defined by the user within his settings (see Fig. 2b) or maybe globally defined by means of the communication system.

Further rules such as personal favorites of the user maybe taken into account. For example, if the user has visited for several times the website of a certain restaurant in the last week, this restaurant will be listed on top of the results. The user may also define favorites, this means, that the user defines services or facilities being member of his personal favorites list. If the result of the search includes a favorite, the favorite will be displayed in preference or will be displayed first in the results' list.

### Reference list:

| | |
|---|---|
| 10 | User equipment |
| 11 | Client computer |
| 12 | Web browser |
| 13 | PSTN terminal, telephone |
| 14 | Data communications network, IP network |
| 15 | Telecommunications network, PSTN network |
| 16 | Switching centre |
| 17 | Web server |
| 18 | Database server |
| 19 | Dedicated connection |
| | |
| 20 | Web page of communications website |
| 21 | Head frame |
| 21a | Control buttons |
| 22 | Contact zone with contact list |
| 23 | Real time zone for contact and communications monitoring |
| 24 | User status |
| 25 | Search field |
| 26 | Search link (to yellow pages) |
| 27a | Selection of result links |
| 28 | User settings |
| | |
| 30 | Settings webpage |
| 31 | Search Results |
| 32 | Communication links to search results |
| 33 | Links to city map |
| 34 | Links to further information |
| | |

## Claims

1. A method for retrieving information (31, 32) about services and/or facilities (31) in the vicinity of a user equipment (10) being part of a communications environment, the communications environment comprising a web server (17) and a client computer (11) being connected to a data communications network (14), a telecommunications terminal (13), in particular a telephone, being connected to a telecommunications network (15), the client computer (11) and telecommunications terminal (13) both being parts of said user equipment (10) assigned to a user, wherein the client computer (11) sends information requests to said web server (17) from which the requested information (31, 32) is delivered to said client computer (11) to be presented by said client computer (11) on a webpage (20, 30), wherein
the location of said user equipment (10) is determined in dependence of a telecommunications identification, in particular a telephone number, being assigned to said user equipment (10) and that said location is taken as a reference for searching for the requested information (31, 32) about the services and/or facilities (31) in the vicinity of the user unit (10),
**characterized in that**
said webpage (20, 30) contains contact data corresponding to said services and/or facilities (31), such as telephone numbers, in the form of links which may be clicked to initiate a communication.

2. A method according to claim 1, **characterized in that** said webpage (20, 30) is part of a personal communications website assigned to said user, wherein the personal communications website is available to said user for managing and controlling his/her communication.

3. A method according to claim 1 or 2, **characterized in that** said telecommunications identification being assigned to said user equipment (10), in particular said telephone number, is taken from the settings (28) of a user profile being assigned to said user, and that said webpage (20) provides the settings (28) of said user profile to be changed by the user, in particular for inputting and/or selecting said telephone number.

4. A method according to claim 3, **characterized in that** said search for services and/or facilities (31) in the vicinity of said user unit (10) is performed by entering search terms into a search field (25) of the webpage (20, 30).

5. A method according to claim 3, **characterized in that** said search is performed by selecting of and clicking onto a link (27a) within a selection field (27) being presented on said webpage (20, 30).

6. A method according to any of the preceding claims, **characterized in that** the parts (11, 13) of said user equipment (10) is integrated into a single user terminal, in particular a mobile user terminal.

7. A method according to any of the preceding claims, **characterized in that** said web server (17) generates a data base query that is handed over to a data base server, in particular a remote database server (18), in order to perform said search for information (31, 32) about the services and/or facilities.

8. A method according to any of the preceding claims **characterized in that** said method further comprises a step of ranking the retrieved information (31, 32) by user defined rules and/or global rules.

9. A communications environment comprising a web server (17), a client computer (11) being connected to a data communications network (14), a telecommunications terminal (13), in particular a telephone, being connected to a telecommunications network (15), the client computer (11) and the telecommunications terminal (13) both being parts of said user equipment (10) assigned to a first user, said client computer (11) being able to send information requests about services and/or facilities to the web server (17) which delivers the requested information (31,32) to the said client computer (11) to be presented to the user by the client computer (11) on a web page (20, 30), wherein
the web server (17) is processing a search for the requested information (31, 32) about the services and/or facilities (31) in dependence of a telecommunications identity, in particular a telephone number being assigned to said user equipment (10), **characterized in that** said webpage (20, 30) contains contact data corresponding to said services and/or facilities (31), such as telephone numbers, in the form of links which may be clicked to initiate a communication.

10. A web server (17) comprising means for carrying out a method according to any of claims 1 to 8.

## Patentansprüche

1. Ein Verfahren zum Abfragen von Informationen (31, 32) über Dienste und/oder Einrichtungen in der Nähe eines Anwendergerätes (10), das Teil einer Kommunikationsumgebung ist, die Kommunikationsumgebung umfasst einen Webserver (17) und einen Client Computer (11), der an ein Datenübertragungsnetzwerk (14), ein Telekommunikationsendgerät (13), insbesondere ein Telefon, das an ein Telekommunikationsnetzwerk (15) angeschlossen ist, wobei der Client Computer (11) und das Telekommunikationsendgerät (13) beide Teil des zu einem Anwender zugeordneten Anwendergerätes (10) sind,
wobei der Client Computer (11) Informationsanfragen an den Webserver (17) sendet, von dem die angeforderte Information (31, 32) an den Client Computer (11) übergeben wird, um von dem Client Computer (11) auf einer Webseite (20, 30) dargestellt zu werden, wobei
die Position des Anwendergerätes (10) in Abhängigkeit einer Telekommunikationskennung, insbesondere einer Telefonnummer, die dem Anwendergerät (10) zugeordnet ist, bestimmt wird und dass die Position als Referenz für die Suche nach der angeforderten Information (31, 32) über die Dienste und/oder Einrichtungen (31) in der Nähe des Anwendergerätes (10) verwendet wird,
**dadurch gekennzeichnet dass**
die Webseite (20, 30) Kontaktdaten entsprechend den Diensten und/oder Einrichtungen (31), wie z. B. Telefonnummern in Form von Links, die angeklickt werden können, um eine Kommunikation zu starten, enthält.

2. Ein Verfahren nach Anspruch 1, **dadurch gekennzeichnet, dass** die Webseite (20, 30) Teil einer persönlichen Kommunikationswebseite ist, die dem Anwender zugeordnet ist, wobei die persönliche Kommunikationswebseite für den Anwender verfügbar ist, um seinen/ihren Nachrichtenverkehr zu verwalten und zu überwachen.

3. Ein Verfahren nach Anspruch 1 oder 2, **dadurch gekennzeichnet, dass** die Telekommunikationskennung dem Anwendergerät (10) zugeordnet ist, insbesondere wird die Telefonnummer den Einstellungen (28) des Anwenderprofils, das dem Anwender zugeordnet ist, entnommen, und dass die Webseite (20) die Einstellungen (28) des Anwenderprofils zur Verfügung stellt, damit sie vom Anwender insbesondere für das Eingeben und/oder Auswählen der Telefonnummer geändert werden.

4. Ein Verfahren nach Anspruch 3, **dadurch gekennzeichnet, dass** die Suche nach Diensten und/oder Einrichtungen (31) in der Nähe des Anwendergerätes (10) mittels der Eingabe von Suchausdrücken in ein Suchfeld (25) der Webseite (20, 30) durchgeführt wird.

5. Ein Verfahren nach Anspruch 3, **dadurch gekennzeichnet, dass** die Suche mittels der Auswahl und dem Klicken auf einen Link (27a) innerhalb eines Auswahlfeldes (27), das auf der Webpage (20, 30) dargestellt wird, durchgeführt wird.

6. Ein Verfahren nach einem der vorhergehenden Ansprüche, **dadurch gekennzeichnet, dass** die Komponenten (11, 13) des Anwendergerätes (10) in eine einzige Anwenderstation, insbesondere eine mobile Anwenderstation, integriert sind.

7. Ein Verfahren nach einem der vorhergehenden Ansprüche, **dadurch gekennzeichnet, dass** der Webserver (17) eine Datenbankabfrage generiert, die an einen Datenbankserver, insbesondere einen dezentralen Datenbankserver (18), übergeben wird, um die Suche nach Informationen (31, 32) über die Dienste und/oder Einrichtungen durchzuführen.

8. Ein Verfahren nach einem der vorhergehenden Ansprüche, **dadurch gekennzeichnet, dass** das Verfahren zusätzlich einen Ablaufschritt zur Klassifikation der abgefragten Informationen (31, 32) nach vom Anwender festgelegten und/oder allgemeinen Regeln umfasst.

9. Eine Kommunikationsumgebung umfassend einen Webserver (17), einen Client Computer (11), die an ein Datenübertragungsnetzwerk (14), ein Telekommunikationsendgerät (13), insbesondere ein Telefon, das an ein Telekommunikationsnetzwerk (15) angeschlossen ist, wobei der Client Computer (11) und das Telekommunikationsendgerät (13), beide Teil des Anwendergerätes (10), einem ersten Anwender zugeordnet sind, der Client Computer (11) in der Lage ist, Informationsanfragen über Dienste und/oder Einrichtungen an den Webserver (17) zu schicken, der die abgefragten Informationen (31, 32) an den Client Computer (11) übergibt, um vom Client Computer (11) für den Anwender auf einer Webseite (20, 30) dargestellt zu werden, wobei
der Webserver (17) eine Suche nach den abgefragten Informationen (31, 32) über die Dienste und/oder Einrichtungen (31) in Abhängigkeit einer Telekommunikationskennung, insbesondere einer Telefonnummer, die dem Anwendergerät (10) zugeordnet ist, ausführt, **dadurch gekennzeichnet, dass**
die Webseite (20, 30) Daten, die den Diensten und/oder Einrichtungen (31) entsprechen, wie z.B. Telefonnummern, in Form von Links enthält, die angeklickt werden können, um eine Kommunikation zu starten.

10. Ein Webserver (17), umfassend Mittel zur Ausführung eines Verfahrens nach einem der Ansprüche 1 bis 8.

## Revendications

1. Procédé pour recueillir une information (31, 32) sur des services et/ou des installations (31) au voisinage d'un équipement d'utilisateur (10) faisant partie d'un environnement de communications, l'environnement de communications comprenant un serveur web (17) et un ordinateur de client (11) relié à un réseau de communication de données (14), un terminal de télécommunications (13), en particulier un téléphone, qui est relié à un réseau de télécommunications (15), l'ordinateur du client (11) et le terminal de télécommunications (13) étant l'un et l'autre des éléments dudit équipement d'utilisateur (10) attribué à un utilisateur, dans lequel l'ordinateur du client (11) envoie des demandes d'information audit serveur web (17) à partir duquel l'information demandée (31, 32) est fournie audit ordinateur du client (11) afin d'être présentée par ledit ordinateur du client (11) sur une page web (20, 30), où
la localisation dudit équipement d'utilisateur (10) est déterminée en fonction d'une identification de télécommunications, en particulier d'un numéro de téléphone, attribué(e) audit équipement d'utilisateur (10), et où ladite localisation est prise comme référence pour rechercher l'information demandée (31, 31) sur les services et/ou équipements (31) au voisinage de l'unité d'utilisateur (10),
**caractérisé en ce que**
ladite page web (20, 30) contient des données de contact correspondant auxdits services et/ou auxdits équipements (31), comme des numéros de téléphone, sous la forme de liens sur lesquels on peut cliquer pour amorcer une communication.

2. Procédé selon la revendication 1, **caractérisé en ce que** ladite page web (20, 30) fait partie d'un site web de communications personnelles attribué audit utilisateur, où le site web de communications personnelles est disponible pour ledit utilisateur dans le but de gérer et de maîtriser sa communication.

3. Procédé selon la revendication 1 ou 2, **caractérisé en ce que** ladite identification de télécommunications attribuée audit équipement d'utilisateur (10), en particulier ledit numéro de téléphone, est prise dans les paramètres (28) d'un profil d'utilisateur qui est attribué audit utilisateur, et **en ce que** ladite page web (20) fournit les paramètres (28) dudit profil d'utilisateur à modifier par l'utilisateur, en particulier pour saisir et/ou sélectionner ledit numéro de téléphone.

4. Procédé selon la revendication 3, **caractérisé en ce que** ladite recherche de services et/ou d'équipements (31) au voisinage de ladite unité d'utilisateur (10) est faite en inscrivant les termes de la recherche dans un champ de recherches (25) de la page web (20, 30).

5. Procédé selon la revendication 3, **caractérisé en ce que** ladite recherche est effectuée en sélectionnant et en cliquant sur un lien (27a) dans un champ de sélection (27) qui est présenté sur ladite page web (20, 30).

6. Procédé selon l'une quelconque des revendications précédentes, **caractérisé en ce que** les parties (11, 13) dudit équipement d'utilisateur sont intégrées dans un seul terminal d'utilisateur, en particulier un terminal d'utilisateur mobile.

7. Procédé selon l'une quelconque des revendications précédentes, **caractérisé en ce que** ledit serveur web (17) fait apparaître une requête de base de données qui est transmise à un serveur de base de données, en particulier un serveur de base de données distant (18), afin d'effectuer ladite recherche d'information (31, 32) portant sur les services et/ou les équipements.

8. Procédé selon l'une quelconque des revendications précédentes, **caractérisé en ce que** ledit procédé comprend en outre une étape de classification de l'information recueillie (31, 32) au moyen de règles définies par l'utilisateur et/ou de règles globales.

9. Environnement de communication comprenant un serveur web (17), un ordinateur de client (11) qui est relié à un réseau de communication de données (14), un terminal de télécommunications (13), en particulier un téléphone, étant connecté à un réseau de télécommunications (15), l'ordinateur du client (11) et le terminal de télécommunications (13) faisant l'un et l'autre partie dudit équipement d'utilisateur (10) attribué à un premier utilisateur, ledit ordinateur de client (11) étant capable d'envoyer des demandes d'information portant sur des services et/ou des équipements au serveur web (17) qui fournit l'information requise (31, 32) audit ordinateur de client (11) à présenter à l'utilisateur par l'ordinateur du client (11) sur une page web (20, 30), où
le serveur web (17) traite une recherche d'information demandée (31, 32) portant sur les services et/ou les équipements (31) en fonction d'une identité de télécommunication, en particulier d'un numéro de téléphone qui est attribué audit équipement d'utilisateur (10), **caractérisé en ce que** ladite page web (20, 30) contient des données de contact correspondant auxdits services et/ou équipements (31), comme des numéros de téléphone, sous forme de liens sur lesquels on peut cliquer pour amorcer une communication.

10. Serveur web (17) comprenant des moyens pour mettre en oeuvre un procédé selon l'une quelconque des revendications 1 à 8.
